# EUROPÄISCHE PATENTSCHRIFT

(11) **EP 4 172 527 B1**
(45) Veröffentlichungstag und Bekanntmachung des Hinweises auf die Patenterteilung: **05.03.2025**
(21) Anmeldenummer: 21739557.3
(22) Anmeldetag: 17.06.2021
(51) Int. Cl.: F16L 33/06

(54) **SCHELLENFIXIERUNG**
CLAMP FIXATION
FIXATION DE COLLIER

(30) Priorität: 30.06.2020 DE 102020208187
(43) Veröffentlichungstag der Anmeldung: 03.05.2023
(73) Patentinhaber: ContiTech Techno-Chemie GmbH, 61184 Karben (DE)
(72) Erfinder: FLACH, Axel, 30419 Hannover (DE); KLOSE, Julian, 30419 Hannover (DE)
(74) Vertreter: Continental Corporation
(86) Internationale Anmeldenummer: PCT/DE2021/200082
(87) Internationale Veröffentlichungsnummer: WO 2022/002321

(56) Entgegenhaltungen:
- KR-B1- 101 064 847
- KR-Y1- 200 476 560
- US-A- 3 389 442
- US-A- 4 453 289

## Beschreibung

Die Erfindung betrifft eine Schellenfixierung zur Fixierung einer Schlauchschelle auf einem Schlauchendabschnitt, aufweisend mindestens ein Schellenband, welches um eine gedachte Längsachse radial beabstandet tangential etwa kreisringförmig herumgewunden ist, eine Spannvorrichtung und mindestens ein axial vom Schellenband abragendes, flächiges Halteelement.

Derartige Schlauchschellen dienen der Verklemmung von Schläuchen auf Anschlussstutzen und sind in großer Vielfalt bekannt und im Einsatz. Sie finden beispielsweise auch im Automobilbau bei Ladeluft- oder Kühlmittelschläuchen Verwendung.

Um die Montage der Schläuche zu vereinfachen, ist es vorteilhaft, die Schlauchschelle auf dem Schlauchende bereits vor der Montage der Schläuche auf den Schlauchenden zu positionieren und zu fixieren, damit der Werker die Schläuche fertig konfektioniert zum Einbau anwenden kann. Dazu sind verschiedene Positionierhilfen bekannt.

In der DE 10 2006 048 344 A1 ist eine Positioniereinrichtung der gattungsgemäßen Art offenbart, bei der Krallen der Positioniereinrichtung in ihrem Verlauf nach dem orthogonalen Abwinkeln einen weiteren Knick mit stumpfem Winkel aufweisen. Auf diese Weise sind die Krallen beim Eindringen in eine Schlauchwand aufeinander zu ablenkbar, sodass sich nach Abschluss des Eindringens ein heftklammerartiger Zustand der Krallen einstellt.

Damit eine derartige Verkrallung entsteht, ist jedoch ein plastisch verformbarer Werkstoff erforderlich, der gegebenenfalls durch eine Zugbelastung auch wieder entformbar ist. Dadurch, dass die Oberflächen der Krallen relativ glatt sein müssen, damit das aufeinander zu Bewegen der Krallen ungestört vonstattengehen kann, ist so die Gefahr gegeben, dass die Verkrallung beim unvorsichtigen Entnehmen beispielsweise aus Transportbehältern wieder gelöst wird.

In der EP 2 250 420 B1 ist eine Schellenanordnung mit Positionierhilfe offenbart, die der Anordnung aus der DE 10 2006 048 344 A1 sehr ähnlich ist, jedoch auf die zusätzliche Abwinklung der Krallen verzichtet. Hier kann zwar ein hochfester, wenig oder schwer plastisch verformbarer Werkstoff zum Einsatz kommen, da aber die

Krallen nach dem Eindringen in eine Schlauchwand keinen Formschluss aufweisen, sondern die Haltekräfte bei Zugbelastung ausschließlich auf der Reibung zwischen Kralle und Schlauchwand beruhen, ist auch hier die Gefahr gegeben, dass sich die Schelle beim Entnehmen beispielsweise aus Transportbehältern zu leicht löst. Eine weitere Schellenfixierung ist aus der KR 101 064 847 B1 bekannt.

Der Erfindung lag die Aufgabe zugrunde, die gattungsgemäße Schellenfixierung bei guter Haltekraft und Montierbarkeit weiter zu vereinfachen und zu verbessern.

Diese Aufgabe wird dadurch gelöst, dass die Schellenfixierung mindestens ein heftklammerartiges Befestigungselement aufweist, wobei das heftklammerartige Befestigungselement mindestens zwei Schenkel und einen Verbindungssteg aufweist und die Schenkel durch die Wand des Schlauchendabschnitts hindurchgestochen und an der von der Einstechseite der Schlauchwand abgewandten Seite nahezu rechtwinklig aufeinander zu oder voneinander weg umgebogen sind, und der Verbindungssteg das flächige Halteelement an der Wand des Schlauchendabschnitt festklemmt.

Diese Anordnung hat den Vorteil, dass das Halteelement selbst keine eigenen Schenkel aufweist und auf diese Art und Weise einfach stanztechnisch herstellbar ist und als Befestigungselement handelsübliche Heftklammern verwendet werden können, sodass eine preiswerte und flexible Lösung zur Fixierung der Schlauchschelle auf dem Schlauchendabschnitt gegeben ist.

In einer Weiterbildung der Erfindung sind die umgebogenen Enden der Schenkel des Befestigungselements durch Aufbringung einer Vorspannung innenseitig in das elastische Material des Schlauchendabschnitts eingesenkt.

Diese Anordnung hat den Vorteil, dass die umgebogenen Enden nicht über die innenseitige Oberfläche des Schlauchendabschnitts hervorstehen. Dadurch kann eine Beschädigung eines eingesteckten Schlauchnippels bei der Montage vermieden werden.

In einer Weiterbildung der Erfindung weist das mindestens eine flächige Halteelement mindestens eine Bohrung auf.

Durch die Bohrung bzw. die Bohrungen sind der oder die Schenkel des heftklammerartigen Befestigungselements hindurch in die Wand des Schlauchendabschnitts gestochen. Dadurch ergibt sich ein Formschluss und damit ein besserer Halt des Halteelements auf dem Schlauchendabschnitt.

In einer Weiterbildung der Erfindung ist die mindestens eine Bohrung oder sind die Bohrungen im Halteelement als Langloch ausgebildet.

Langlöcher erleichtern das Einfädeln der Schenkel des Befestigungselements.

In einer Weiterbildung der Erfindung weist das flächige Halteelement eine T-Form auf, wobei der fußseitige Abschnitt des T-förmigen Halteelements an dem Schellenband angeordnet und das heftklammerartige Befestigungselement zwischen dem Schellenband und dem kopfseitigen Ende des T-förmigen Halteelement angeordnet ist, wobei der fußseitige Abschnitt des Halteelements zwischen dem Verbindungssteg des Befestigungselements und der Schlauchwand eingeklemmt ist.

Diese Art der Anordnung erhöht die Sicherheit gegen Abziehen der Schwelle vom Schlauchendabschnitt, da das kopfseitige Ende des T-förmigen Halteelements mit den in die Schlauchwand angestochenen Schenkeln des Befestigungselements eine Art Verriegelung bildet.

In einer Weiterbildung der Erfindung ist das flächige Halteelement aus Kunststoff ausgebildet.

Die Ausbildung aus Kunststoff hat den Vorteil, dass die Schenkel des Befestigungselements ohne vorherige Bohrungen durch das flächige Halteelement hindurch in die Schlauchwand einstechbar sind.

In einer Weiterbildung der Erfindung weist das flächige Halteelement aus Kunststoff mindestens einen Bereich auf, in dem die Wandstärke des flächigen Halteelements reduziert ist.

Die reduzierte Wandstärke erleichtert das Durchstechen der Schenkel des Befestigungselements.

In einer Weiterbildung der Erfindung weist das flächige Halteelement an seinem dem Ende des Schlauchendabschnitts zugeordneten Ende eine radial nach innen gerichtete Abkantung auf.

Diese Abkantung kann bei der Montage der Schlauchschelle auf den Schlauchendabschnitt als Axialanschlag dienen und erleichtert so die Montage.

Anhand der Zeichnungen wird nachstehend ein Ausführungsbeispiel der Erfindung näher erläutert. Es zeigt:
Fig. 1 eine perspektivische Draufsicht einer erfindungsgemäßen Schellenfixierung und
Fig. 2 einen Teilquerschnitt der erfindungsgemäßen Schellenfixierung.

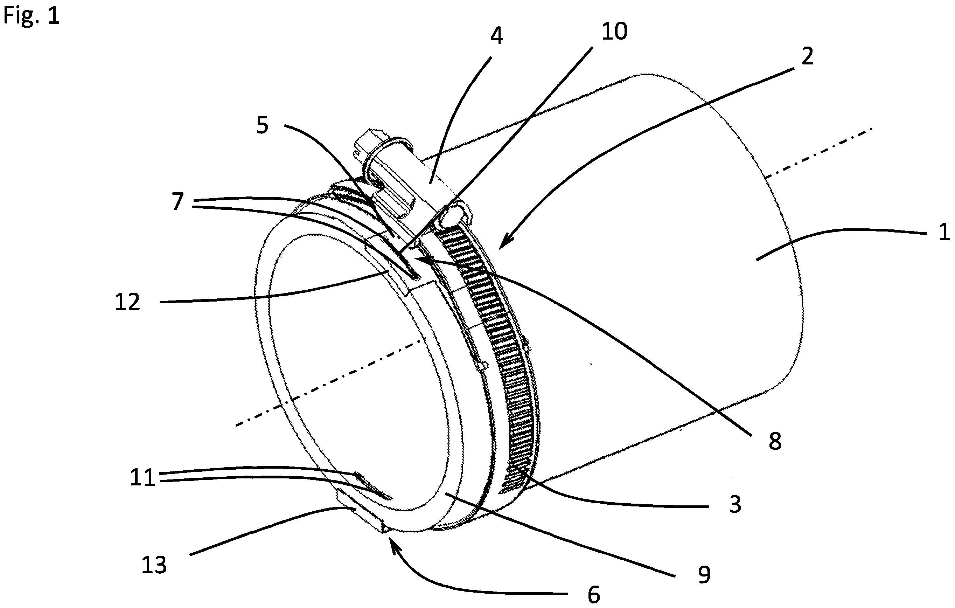

Die Fig. 1 zeigt eine perspektivische Draufsicht einer erfindungsgemäßen Schellenfixierung. Ein Schlauchendabschnitt 1 weist eine Schlauchschelle 2 mit einem Schellenband 3 und einer Spannvorrichtung 4 auf. Ein Halteelement 5 ragt in axialer Richtung auf das Ende des Schlauchendabschnitts von der Schlauchschelle 2 ab. Ein weiteres Halteelement 6 ist hier nur in einem Endabschnitt sichtbar.

Das Halteelement 5 weist zwei Bohrungen 7 auf, durch die jeweils ein hier nicht sichtbarer Schenkel eines heftklammerartigen Befestigungselements 8 hindurchragt und durch die Wand 9 des Schlauchendabschnitts 1 gestochen ist. Ein Verbindungssteg 10, der die beiden Schenkel des heftklammerartigen Befestigungselements 8 miteinander verbindet, liegt außenseitig zwischen den Bohrungen 7 auf dem Halteelement 5 auf.

Ein weiteres heftklammerartiges Befestigungselement, welches bei dem Halteelement 6 analog wie bei dem Halteelement 5 angeordnet ist, ist hier nur mit seinen zwei aufeinander zu umgebogenen Enden 11 sichtbar. Durch eine beim Umbiegen aufgebrachte Vorspannung sind die beiden Enden 11 in die Wand 9 des Schlauchendabschnitts 1 eingesenkt.

Die Halteelemente 5 und 6 weisen endseitig jeweils eine radial nach innen gerichtete Abkantung 12 und 13 auf, die als axialer Anschlag für das Positionieren der Schlauchschelle 2 auf dem Schlauchendabschnitt 1 wirken.

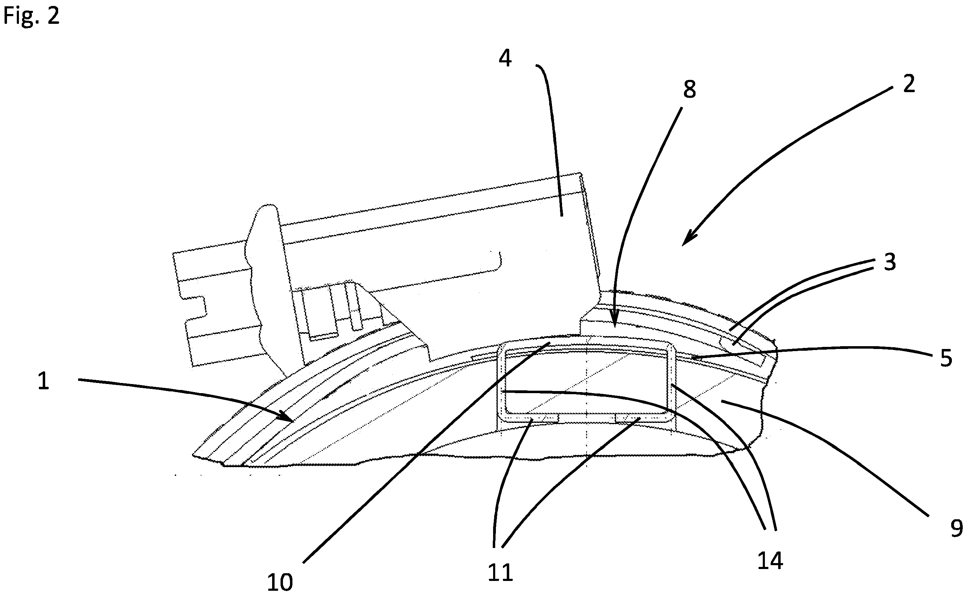

In der Fig. 2 ist ein Teilausschnitt eines Querschnitts der erfindungsgemäßen Schellenfixierung gezeigt. Das Schellenband 3 ist um den Schlauchendabschnitt 1 herumgewunden und steht mit der Spannvorrichtung 4 in bekannter Weise in Wirkverbindung.

Das Halteelement 5 ist von den Schenkeln 14 des Befestigungselements 8 durchstochen und ragt durch die Wand 9 des Schlauchendabschnitts 1 hindurch, wobei die endseitigen Enden 10 und 11 der Schenkel 14 nahezu rechtwinklig aufeinander zu umgebogen und durch die dabei aufgebrachte Vorspannung in die Wand 9 des Schlauchendabschnitts 1 eingesenkt sind. Dadurch ragen die Enden 10 und 11 nicht innenseitig über die Wand 9 des Schlauchendabschnitts 1 hinaus.

Der Verbindungssteg 10 klemmt das Halteelement 5 durch die Vorspannung fest an den Schlauchendabschnitt 1, wobei eine reibschlüssige und durch die eingestochenen Schenkel 14 auch eine formschlüssige Fixierung der Schlauchschelle 2 gewährleistet ist.

### Bezugszeichenliste

### (Teil der Beschreibung)

- 1: Schlauchendabschnitts
- 2: Schlauchschelle
- 3: Schellenband
- 4: Spannvorrichtung
- 5: erstes Halteelement
- 6: weiteres Halteelement
- 7: Bohrungen im Halteelement 5 oder 6
- 8: heftklammerartiges Befestigungselement
- 9: Wand des Schlauchendabschnitts 1
- 10: Verbindungssteg des heftklammerartigen Befestigungselements 8
- 11: umgebogene Enden des heftklammerartiger Befestigungselements 8
- 12, 13: endseitiger Abkantungen der Halteelemente 5 und 6
- 14: Schenkel der heftklammerartigen Befestigungselemente 8

## Patentansprüche

1. Schellenfixierung zur Fixierung einer Schlauchschelle (2) auf einem Schlauchendabschnitt (1), aufweisend mindestens ein Schellenband (3), welches um eine gedachte Längsachse radial beabstandet tangential etwa kreisringförmig herumgewunden ist, eine Spannvorrichtung (4) und mindestens ein axial vom Schellenband (3) abragendes, flächiges Halteelement (5, 6), **dadurch gekennzeichnet, dass** die Schellenfixierung mindestens ein vom Halteelement (5, 6) separates, heftklammerartiges Befestigungselement (8) aufweist, wobei das heftklammerartige Befestigungselement (8) mindestens zwei Schenkel (14) und einen Verbindungssteg (10) aufweist und die Enden (11) der Schenkel (14) durch die Wand (9) des Schlauchendabschnitts (1) hindurchgestochen und an der von der Einstechseite der Schlauchwand (9) abgewandten Seite nahezu rechtwinklig aufeinander zu oder voneinander weg umgebogen sind, und der Verbindungssteg (10) das mindestens eine flächige Halteelement (5, 6) an der Wand (9) des Schlauchendabschnitts (1) festklemmt.

2. Schellenfixierung nach Anspruch 1, **dadurch gekennzeichnet, dass** die umgebogenen Enden (11) der Schenkel (14) des heftklammerartigen Befestigungselements (8) durch Aufbringung einer Vorspannung innenseitig in das elastische Material der Wand (9) des Schlauchendabschnitts (1) eingesenkt sind.

3. Schellenfixierung nach Anspruch 1 oder 2, **dadurch gekennzeichnet, dass** das mindestens eine flächige Halteelement (5, 6) mindestens eine Bohrung (7) aufweist, durch die der oder die Schenkel (14) des heftklammerartigen Befestigungselements (8) hindurch in die Wand (9) des Schlauchendabschnitts (1) gestochen ist/sind.

4. Schellenfixierung nach Anspruch 3, **dadurch gekennzeichnet, dass** die mindestens eine Bohrung (7) oder die Bohrungen im mindestens einen flächigen Halteelement (5, 6) als Langloch ausgebildet sind.

5. Schellenfixierung nach Anspruch 1, 2 oder 3, **dadurch gekennzeichnet, dass** das mindestens eine flächige Halteelement eine T-Form aufweist, wobei der fußseitige Abschnitt des T-förmigen Halteelements an dem Schellenband (3) angeordnet und das heftklammerartige Befestigungselement (8) zwischen dem Schellenband (3) und dem kopfseitigen Ende des mindestens einen T-förmigen Halteelement angeordnet ist, wobei der fußseitige Abschnitt des mindestens einen Halteelements zwischen dem Verbindungssteg des Befestigungselements und der Schlauchwand eingeklemmt ist.

6. Schellenfixierung nach mindestens einem der vorstehenden Ansprüche, **dadurch gekennzeichnet, dass** das mindestens eine flächige Halteelement (5, 6) aus Kunststoff ausgebildet ist.

7. Schellenfixierung nach Anspruch 6, **dadurch gekennzeichnet, dass** das mindestens eine flächige Halteelement (5, 6) aus Kunststoff mindestens einen Bereich aufweist, in dem die Wandstärke des flächigen Halteelements (5, 6) reduziert ist.

8. Schellenfixierung nach mindestens einem der vorstehenden Ansprüche, **dadurch gekennzeichnet, dass** das mindestens eine flächige Halteelement (5, 6) an seinem dem Ende des Schlauchendabschnitts (1) zugeordneten Ende eine radial nach innen gerichtete Abkantung (12, 13) aufweist.

## Claims

1. Clip-fixing means for fixing a hose clip (2) on a hose end portion (1), having at least one clip band (3), which is wound tangentially in an approximately circular-ring-shaped manner around an imaginary longitudinal axis with a radial spacing, having a clamping device (4), and having at least one areal holding element (5, 6), which protrudes axially from the clip band (3), **characterized in that** the clip-fixing means has at least one staple-like fastening element (8) which is separate from the holding element (5, 6), wherein the staple-like fastening element (8) has at least two legs (14) and a connecting web (10) and the ends (11) of the legs (14) are made to penetrate through the wall (9) of the hose end portion (1) and, on the side directed away from the penetration side of the hose wall (9), are bent nearly at right angles towards one another or away from one another, and the connecting web (10) securely clamps the at least one areal holding element (5, 6) on the wall (9) of the hose end portion (1).

2. Clip-fixing means according to Claim 1, **characterized in that** the bent ends (11) of the legs (14) of the staple-like fastening element (8) are sunk into the elastic material of the wall (9) of the hose end portion (1) on the inner side by being subjected to preloading.

3. Clip-fixing means according to Claim 1 or 2, **characterized in that** the at least one areal holding element (5, 6) has at least one bore (7) through which the leg(s) (14) of the staple-like fastening element (8) is/are made to penetrate into the wall (9) of the hose end portion (1).

4. Clip-fixing means according to Claim 3, **characterized in that** the at least one bore (7) or the bores in the at least one areal holding element (5, 6) is/are formed as a slot.

5. Clip-fixing means according to Claim 1, 2 or 3, **characterized in that** the at least one areal holding element has a T shape, wherein the foot-side portion of the T-shaped holding element is arranged on the clip band (3) and the staple-like fastening element (8) is arranged between the clip band (3) and the head-side end of the at least one T-shaped holding element, wherein the foot-side portion of the at least one holding element is clamped between the connecting web of the fastening element and the hose wall.

6. Clip-fixing means according to at least one of the preceding claims, **characterized in that** the at least one areal holding element (5, 6) is made of plastic.

7. Clip-fixing means according to Claim 6, **characterized in that** the at least one areal holding element (5, 6) composed of plastic has at least one region in which the wall thickness of the areal holding element (5, 6) is reduced.

8. Clip-fixing means according to at least one of the preceding claims, **characterized in that** the at least one areal holding element (5, 6) has at its end assigned to the end of the hose end portion (1) a radially inwardly directed angled portion (12, 13).

## Revendications

1. Fixation de collier de serrage pour la fixation d'un collier de serrage de tuyau (2) sur une section d'extrémité de tuyau (1), présentant au moins une bande de collier de serrage (3), qui est enroulée autour d'un axe longitudinal imaginaire à distance radiale tangentiellement à peu près en forme d'anneau de cercle, un dispositif de serrage (4) et au moins un élément de retenue plat (5, 6) dépassant axialement de la bande de collier de serrage (3), **caractérisée en ce que** la fixation de collier de serrage présente au moins un élément de fixation (8) de type agrafe séparé de l'élément de retenue (5, 6), l'élément de fixation (8) de type agrafe présentant au moins deux branches (14) et une barrette de liaison (10) et les extrémités (11) des branches (14) transperçant la paroi (9) de la section d'extrémité de tuyau (1) et étant repliées presque à angle droit l'une vers l'autre ou en s'éloignant l'une de l'autre sur le côté détourné du côté de perçage de la paroi de tuyau (9), et la barrette de liaison (10) serrant l'au moins un élément de retenue plat (5, 6) contre la paroi (9) de la section d'extrémité de tuyau (1).

2. Fixation de collier de serrage selon la revendication 1, **caractérisée en ce que** les extrémités repliées (11) des branches (14) de l'élément de fixation (8) de type agrafe sont enfoncées intérieurement dans le matériau élastique de la paroi (9) de la section d'extrémité de tuyau (1) par application d'une précontrainte.

3. Fixation de collier de serrage selon la revendication 1 ou 2, **caractérisée en ce que** l'au moins un élément de retenue plat (5, 6) présente au moins un alésage (7) à travers lequel la ou les branches (14) de l'élément de fixation (8) de type agrafe transperce(nt) la paroi (9) de la section d'extrémité de tuyau (1).

4. Fixation de collier de serrage selon la revendication 3, **caractérisée en ce que** l'au moins un alésage (7) ou les alésages dans l'au moins un élément de retenue plat (5, 6) sont réalisés sous forme de trou oblong.

5. Fixation de collier de serrage selon la revendication 1, 2 ou 3, **caractérisée en ce que** l'au moins un élément de retenue plat présente une forme en T, la section côté pied de l'élément de retenue en forme de T étant agencée sur la bande de collier de serrage (3) et l'élément de fixation (8) de type agrafe étant agencé entre la bande de collier de serrage (3) et l'extrémité côté tête de l'au moins un élément de retenue en forme de T, la section côté pied de l'au moins un élément de retenue étant serrée entre la barrette de liaison de l'élément de fixation et la paroi du tuyau.

6. Fixation de collier de serrage selon au moins l'une quelconque des revendications précédentes, **caractérisée en ce que** l'au moins un élément de retenue plat (5, 6) est réalisé en matière plastique.

7. Fixation de collier de serrage selon la revendication 6, **caractérisée en ce que** l'au moins un élément de retenue plat (5, 6) en matière plastique présente au moins une zone dans laquelle l'épaisseur de paroi de l'élément de retenue plat (5, 6) est réduite.

8. Fixation de collier de serrage selon au moins l'une quelconque des revendications précédentes, **caractérisée en ce que** l'au moins un élément de retenue plat (5, 6) présente, à son extrémité associée à l'extrémité de la section d'extrémité de tuyau (1), un pliage (12, 13) orienté radialement vers l'intérieur.
